# EUROPEAN PATENT APPLICATION

(11) **EP 1 939 022 A1**
(43) Date of publication of application: **02.07.2008**
(21) Application number: 07380381.9
(22) Date of filing: 27.12.2007
(51) Int. Cl.: B60J 1/10

(54) **Side quarter window for automotive vehicles**

(30) Priority: 27.12.2006 ES 200602781 U
(71) Applicant: Seat, S.A., 08760 Martorell, Barcelona (ES)
(72) Inventor: Peña Martinez, José c/o Seat, S.A., 08760 Martorell (Barcelona) (ES); Dos Subira, Jordi c/o Seat, S.A., 08760 Martorell (Barcelona) (ES); Candel Manrique, Nicolas c/o Seat, S.A., 08760 Martorell (Barcelona) (ES)
(74) Representative: Carvajal y Urquijo, Isabel

(57) **Abstract**

This invention relates to a side quarter window for automotive vehicles, intended to receive a window (2) which is supported and fixed on a recessed flat area (5). This flat area (5) is interrupted and transformed into an inclined plane (7) reaching the vertex (3), with a degree of inclination that allows forming a vertex with a very reduced bending radius.

## Description

### Object of the Invention

The present invention relates to a side quarter window for automotive vehicles, understanding as such the area of the vehicle framing the glass forming the fixed windows located after the back doors of the vehicle and on the side walls thereof.

The object of the invention is to be able to make very small radii in said quarter window, which in turn allow increasing design freedom and consequently renewing the aesthetics of the vehicle without creases being produced in the panel of the bodywork during the stamping thereof despite said reduction in diameter.

### Background of the Invention

As is known automotive vehicles often incorporate side rear windows above the rear fenders and immediately behind the rear doors. These windows usually have a triangular or trapezoidal tending to triangular configuration with a rear acute vertex.

The construction of the side quarter window framing the glass or window strictly speaking implies a limitation as regards the magnitude of the angles that it can form since these side quarter windows have one side containing a flat area in order to be able to adhere to the glass, such that during the stamping said flat area limits the mentioned rear angle of the back quarter window, obligating large radii to be used in order to prevent creases from appearing on the panel in said stamping.

Currently and to solve this excessively large radius problem in the rear vertex of the quarter window, a process based on combining two parts in order to obtain a small radius is known. Initially one part of the panel of the quarter window assembly is cut, then the stamping is carried out and finally the cut part is welded to the quarter window. Damaging the aesthetics of the automobile is thus avoided by preventing folds from appearing.

In other cases surface defects are simply accepted on the side of the body.

### Description of the Invention

The back quarter window which the invention proposes has been conceived and structured in order to definitively solve the problems previously set forth with a simple as well as efficient solution.

To that end and more specifically said quarter window lacks in a wide rear sector of the mentioned conventional flat area of the side, and in substitution in said flat area a sharply inclined plane is provided, which because of its own inclination very considerably favors the deformation of the quarter window during the stamping of the panel in order to achieve angles with a very small radius.

Evidently substituting the classic flat strip for an inclined plane prevents the glass of the window from being fixed to said plane by means of adhesive, since it only contacts the plane, in the best of cases, through a linear edge, for which purpose it has been provided that at the free edge of said panel, corresponding with the inclined plane, a hook-shaped rubber gasket is coupled, specifically a gasket provided with a groove in which the edge of the panel penetrates, and with its outer face provided with a stepped recess to support and fix the glass.

In this way a small bending radius in the vertices of these side rear windows of the vehicles is simply achieved in optimal conditions for the respective quarter windows, since evidently it is much easier to transform a rectilinear strip of a panel into a conical element than into a circumferential flat element.

### Description of the Drawings

To complement the description being made and for the purpose of aiding to better understand the features of the invention according to a preferred practical embodiment thereof, a set of drawings is attached as an integral part of said specification, in which the following has been shown with an illustrative and non-limiting character.

Figure 1 shows a partial side elevational view of an automative vehicle at the level of the corresponding quarter window made according to the object of the present invention.

Figure 2 shows cross-section view of a detail of the assembly shown in the previous figure according to section line A-A of said figure.

Figure 3 finally shows a section view similar to that of the previous figure, "assembled" according to a perspective view of the rear area of the cover more clearly showing the location of the elements on which the invention is based.

### Preferred Embodiment of the Invention

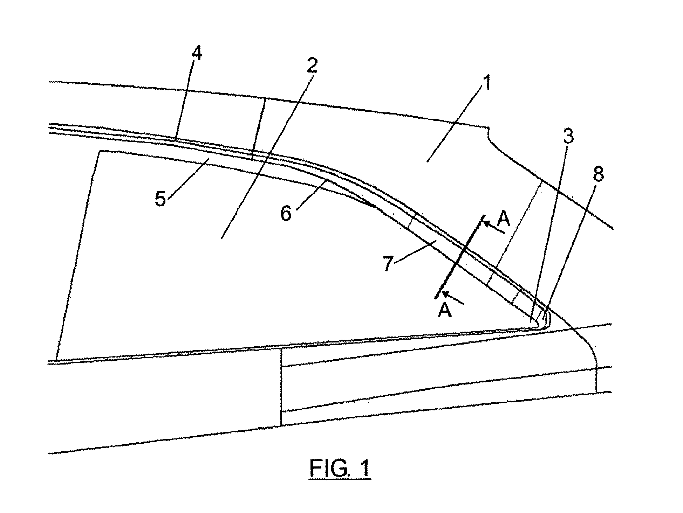

In view of the figures indicated and especially Figure 1, the upper-rear area (1) of an automotive vehicle can be observed, provided with side rear windows or glass (2), in turn having a rear vertex (3), the bending radius of which is intended to be minimized for the purpose of allowing new design lines for the vehicle as a whole.

The mentioned side rear quarter window (4) has a wide front section provided with a flat area (5), which disappears progressively in an intermediate sector (6) considerably before reaching the mentioned rear vertex (3), and ends up being finished in a sharply inclined wide section (7), such that the inclination thereof favors forming a frustoconical inflection (8) corresponding to the mentioned vertex (3) with a reduced bending radius.

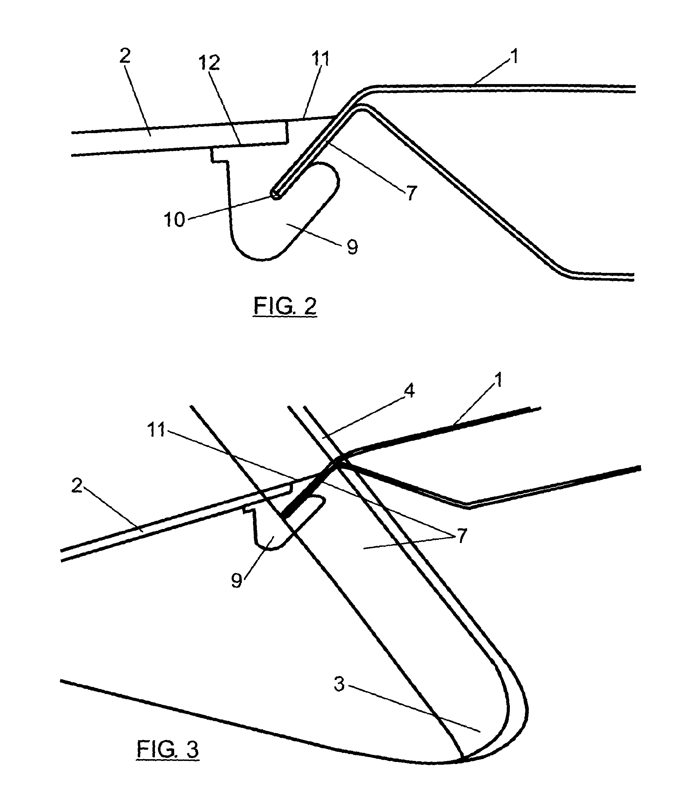

To fix the glass (2) to the quarter window (4) in this inclined area (7) thereof, a rubber profile (9) is provided, which by means of a deep groove (10) configures a type of hook able to tightly receive the inclined plane (7) of the quarter window therein, an outer plane (11) considerably parallel to the plane of the body (1) being defined in said rubber part (9), having a straight and stepped recess (12), with a depth coinciding with the thickness of the window or glass (6) and intended to receive the latter, as observed in Figure 2.

As is deduced from that previously set forth, the inclination of the plane (7) can be as marked as is considered appropriate for obtaining a vertex (8) with a minimum bending radius, said bending being achieved in the stamping phase of the panel (1) without the least risk that folds or creases are produced therein.

## Claims

1. A side quarter window for automotive vehicles of the type intended to receive the side rear glass or window (2) of the vehicle located above the rear fender thereof immediately behind its rear door, and of those incorporating a recessed flat area (5) to support and fix the glass by means of an adhesive forming said window, **characterized in that** said flat area is interrupted considerably before reaching the rear vertex (3) of the window, being progressively substituted by an inclined plane (7) affecting the rear vertex thereof with a degree of inclination suitable to allow the formation of a rear vertex with a very reduced bending radius without creases forming in the panel during the stamping thereof.

2. A side quarter window for automotive vehicles according to claim 1, **characterized in that** the mentioned inclined plane (7) of the quarter window receives, through its free edge, a rubber profile (9) provided with a deep groove (10) in which the edge of the panel is housed, said rubber profile further having on its outer face and considerably parallel to the body of the vehicle a stepped recess (12) to couple and fix the glass (2) forming the window.
